# EUROPEAN PATENT APPLICATION

(11) **EP 0 986 237 A2**
(43) Date of publication of application: **15.03.2000**
(21) Application number: 99660143.1
(22) Date of filing: 09.09.1999
(51) Int. Cl.: H04M 3/42

(54) **Method of allocating a secondary, bidirectionally functioning temporary telephone number**

(30) Priority: 09.09.1998 FI 981937
(71) Applicant: Helsingin Puhelin OYJ - Helsingfors Telefon ABP, 00130 Helsinki (FI)
(72) Inventor: Alho, Jukka, 02730 Espoo (FI); Fils, Henry, 00140 Helsinki (FI)
(74) Representative: Lipsanen, Jari Seppo Einari

(57) **Abstract**

The invention relates to a method of allocating an unlisted temporary number in an intelligent-network-based telephone system having a permanent A-number allocated to a subscriber, said subscriber wishing to place an order to said temporary number allocation service. In the method, the subscriber identity of the temporary number service orderer is verified with the help of an automated routine based on the subscriber's permanent A-number; by consulting a table, on the basis of the verified A-number, the service ordered is allocated to use an unlisted temporary number having a validation period selectable by the service orderer within preset time limits, and the service orderer is given a password permitting alteration of the validation period of the temporary number. According to the invention, the A-number identity of the service orderer is replaced in the direction of outgoing calls with said allocated temporary number in at least a portion of outgoing calls.

## Description

The present invention relates to a method according to the preamble of claim 1 for allocating a secondary, bidirectionally functioning temporary telephone number.

From FI patent application publication no. 964,639, a method is known in the art for allocating a temporary telephone number for a limited time of use.

However, the conventional arrangement is handicapped by the limitation that the subscriber (denoted later in the text as the calling party or the A-number subscriber) availing of the temporary number can use the number only for being the called party accessed via said number (i.e., being the subject of incoming traffic only), but when the subscriber wishes to call out from his connection, he cannot identify himself during the validity time of the temporary number to the called party via an automatic number indication service or a similar function by the A-number identity assigned to the temporary number.

Thence, if the subscriber wishes to conceal his identity from the called party to whom he places a call, he has two options: either to set the number from which he calls as an unlisted number (thus preventing the calling number from being shown, e.g., on the display of a GSM mobile phone) or to place the call from an unidentifiable connection (such as a pay telephone).

It is an object of the present invention to overcome the drawbacks of the above-described technique and to provide an entirely novel type of method for allocating a secondary, bidirectionally functioning temporary telephone number.

The goal of the invention is achieved by a service that gives the subscriber calling from the A-number the possibility of using an optional calling party identity in outgoing calls.

In the method according to the invention, the auxiliary information transmitted to indicate the subscriber's selection to use the alternative indication of the subscriber's A-number is a separate *function code* or a similar *control direction code* transmitted along with the outgoing signals in order to alter the subscriber's A-number identity.

In this embodiment, said selection of the function code or control direction code causes the subscriber's normal telephone number to be replaced in all outgoing calls (including calls redirected by a call transfer service as outgoing calls from the subscriber's permanent number) by the temporary telephone number assigned to the subscriber's connection when such a temporary number is activated for the connection and the subscriber so controls to occur in conjunction during the dialing of the called party's number or when a call transfer service is being activated.

According to another embodiment of the invention, the subscriber possessing the permanently allocated original A-number may at his will select to use another A-number identity that is allocated for his use independently from the permanent number of the subscriber's own connection. Thence, the subscriber using the A-number may at his will use a suitable function code for setting his personal mobile phone call to be indicated coming from the A-number of his work mobile phone or from the extension corresponding to his office number. This gives the subscriber an option to serve his profession and indicate correct contact information also in situations when he is remote from the location of his actual work telephone.

More specifically, the method according to the invention is characterized by what is stated in the characterizing part of claim 1.

The invention offers significant benefits.

The invention facilitates the use of the temporary telephone number also in outgoing calls as the identifier of the calling party (i.e., the subscriber using the temporary A-number) or as the number from which the calls are transferred.

The invention permits the receiving party of a call to entirely conceal the called number from the calling party and, in the case of a call-back connection, to conceal the actual identity of the called party. Thus, the invention can further lower the threshold of ordering/canceling such a temporary telephone number by making the ordering/canceling operation of the temporary number so well automated as to take place via a conventional service dialing operation not requiring the assistance of a human operator for ordering or canceling the temporary number, thus permitting the subscriber's actual telephone number to be held fully confidential both in the incoming calls as well as in the outgoing calls.

The protection of the calling party's identity through the A-number identity change facilitates an entirely anonymous business transactions irrespective of the call direction.

By virtue of the invention, people calling on service lines of the type "Chat room" may act under his temporary A-number identity and with full confidence give said temporary number to an unknown other party for use in intimate conversations, yet keeping his permanent subscriber number concealed from the calling party.

People calling to "Personal" advertisement services can utilize the invention for entirely anonymous call-back connections, too.

In the following, the invention will be examined in greater detail with the help of exemplifying embodiments illustrated in the appended drawings in which
Figure 1 shows a flow diagram of the temporary number allocation scheme according to the prior art;
Figure 2 shows a flow diagram of the use of a temporary number allocated according to the prior art;
Figure 3 shows a flow diagram of an embodiment of the number allocation method according to the invention;
Figure 4 shows a flow diagram of an alternative embodiment of the number allocation method according to the invention; and
Figure 5 shows a flow diagram of a third embodiment of the number allocation method according to the invention.

According to a preferred embodiment of the invention, the A-number identity change is employed in the method for allocating a secondary, temporary number to a subscriber when the subscriber possessing said original A-number orders said "temporary number" for personal use. In this embodiment, the procedure for number ordering is identical to that employed in the prior-art scheme. This procedure will be discussed in detail later in the text.

In the method according to the invention, the logic control of an IN SCP (Intelligent Network Service Control Point) is modified so that if the connection from which a call is made already has an activated "temporary number" allocated thereto and the caller has not used a specific selection code, the call is treated as such a normal outgoing call in which the subscriber wishes the number of the caller identification field to be replaced by the ordered "temporary number". (In this context, the term caller identification field refers to the IAM/IAI fields of the signaling messages, that is, the fields Calling Line Identity (CLI) or, in the case of transferred call, the Redirecting Number (REDI) field and/or the Original Called Number (OCA) field.)

Thus the called party (also known as the B-number subscriber) will receive the identification information of the "temporary number" that he can use for calling back to the party from which the call was received; however, the temporary number does not give the B-number subscriber any chance of identifying the actual A-number identity of the calling party (inasmuch the "temporary number" bears no relationship to the subscriber's permanent number).

The procedure can be implemented using only one control code sequence (e.g., *69*). Then, the operation takes place in the following manner.

First, the steps to be executed after the receipt of the control code are evaluated by the rules examining whether the call is:
1) an order/programming call for a service function, or
2) an outgoing call in which the subscriber prefers the actual number of the connection to be replaced by the temporary number. Herein, activation of the temporary number service must have been performed beforehand.

Accordingly, the use of the control code *69* in step (1) takes the subscriber to the service programming subroutine with the precondition that a specific prefix code which sets the service into the programming mode has been used in conjunction with the dialing of said control code and the subscriber calling from the A-number already has an ordered (valid) "temporary number".

In contrast, calls placed without said preceding programming code are treated as normal use of the service, that is, involving the change of the calling party's indicated A-number with the precondition that the subscriber calling from the original A-number already has an ordered (valid) "temporary number".

Hence, the change of the indicated A-number takes place only in all such outgoing numbers in which the subscriber first dials the prefix code *69* assuming that he has a valid, allocated "temporary number".

Respectively, an outgoing call dialed in the conventional manner (without the specific prefix code) is processed as a normal call.

If the dialing of the call does not include the service programming control code, the call is treated as an order by the service procedure in the case that the subscriber calling from the A-number does not already have a (valid) "temporary number" allocated for his use.

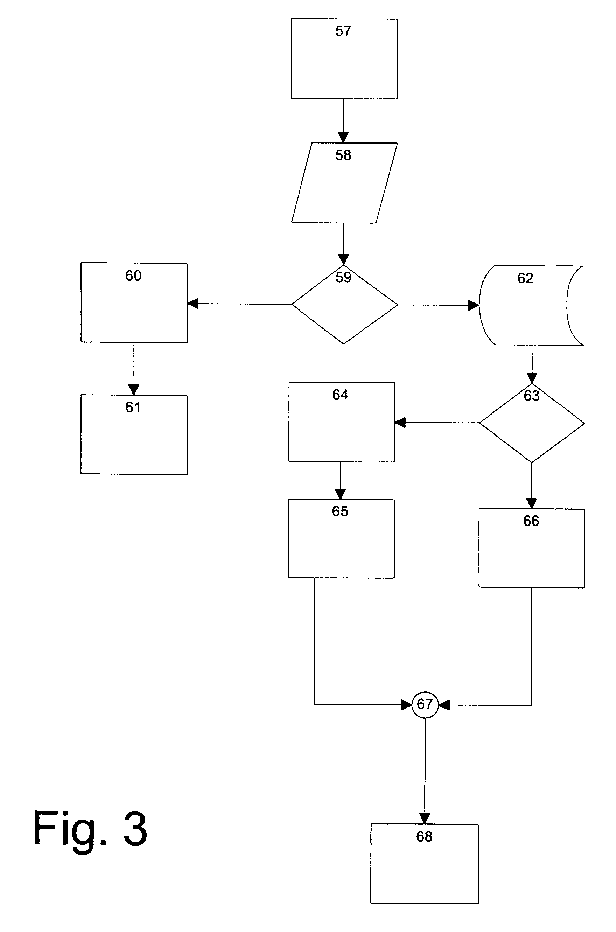

Now referring to Fig. 3, therein is described in more detail at a flow diagram level the use of a single control code for both service ordering, programming (change of control information) and utilization (i.e., for change of the indicated A-number in all outgoing calls dialed with the prefix employed for triggering the use of the service).

The information steering the system operation into the programming mode or, alternatively, into its normal operation is obtained from the dialing sequence used by the subscriber. In this exemplifying embodiment, the dial tone of key # is used to select the programming mode. Thus, if the call is started by dialing *69*#, the call is routed to the service programming subroutine. On the other hand, the dialing of the sequence *69*(B-number) is directed to the number change subroutine of the service in which the A-number is replaced by the "temporary number". In the flow diagram of Fig. 3, block 57 represents the dialing of the programming mode selection code *69*. In block 58, a query is sent to a data base using the A-number as a search key to check whether the subscriber already has an ordered (allocated) "temporary number". Block 59 tests whether the A-number has a "temporary number" allocated thereto. If not, the ordering of the "temporary number" is carried out according to block 60 in the manner disclosed, e.g., in FI patent application no. 964,639 and the execution of this branch is terminated in block 61. In the case that the subscriber already has a "temporary number", the control program proceeds to block 62, wherein full data for the next steps is fetched, after which block 63 tests if the subscriber dialed the programming mode control code #. If the result is yes, the control program proceeds to block 66, wherein the service parameters may be altered. In the case that the programming control code # was not dialed, the control program proceeds to block 64, wherein the identity of the A-number is altered and then the call is switched to the desired B-number of the called party (e.g., 09-6061) in block 65 and, at the end of the call, the connection is cleared in blocks 67-68.

In the following, the control process is described for an arrangement of two service control codes (one prefix code dedicated for turning on the service programming mode and another prefix code for placing outgoing calls via the service). This system can be expected to find greater favor among users due to practical reasons: for a layman subscriber it looks more logical to call a one number for programming and an another number during the actual use of the service. This is the conventional arrangement, e.g., for quick-dial programming, wherein the numbers to which calls must be made for programming the quick-dial codes are entirely different from those used during the use of the service.

In the following text, the use of the service is described for an outgoing call. The actual ordering of the "temporary number" takes place entirely in the conventional manner. This standard procedure is described, e.g., in cited FI patent application no. 964,639. In fact, the invention is particularly related to the use of a changed subscriber A-number in outgoing calls.

The service control is next discussed using one service number (096061) in an exemplifying manner in order to elucidate the steps related to the number change routine and the differences in respect to conventional outgoing call handling routines.

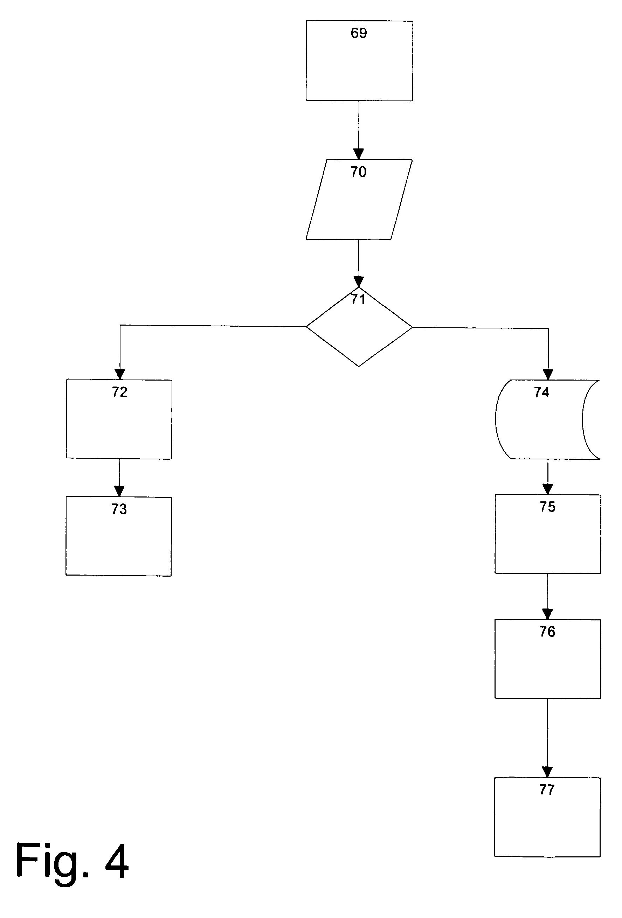

As shown in Fig. 4, the service control process may be executed in an exemplary manner according to the invention through the following steps:

To use the service, the code *66* is selected in block 69 and a query is sent in block 70 to a data base using the A-number as a search key to check whether the subscriber already has an ordered "temporary number". Block 71 makes a decision on the basis of the information retrieved in the preceding block. If a "temporary number" is not already allocated (ordered), block 72 issues an announcement of service nonavailability for the calling subscriber and the process is terminated in block 73. If the service has been already ordered, the service program enters block 74, wherein the information retrieved from the data base is available. In block 75, the data base information is used to change the calling subscriber's indicated A-number into the ordered "temporary number", after which the outgoing call is switched to the desired B-number of the called party in block 76 and, at the end of the call, the connection is cleared in block 77.

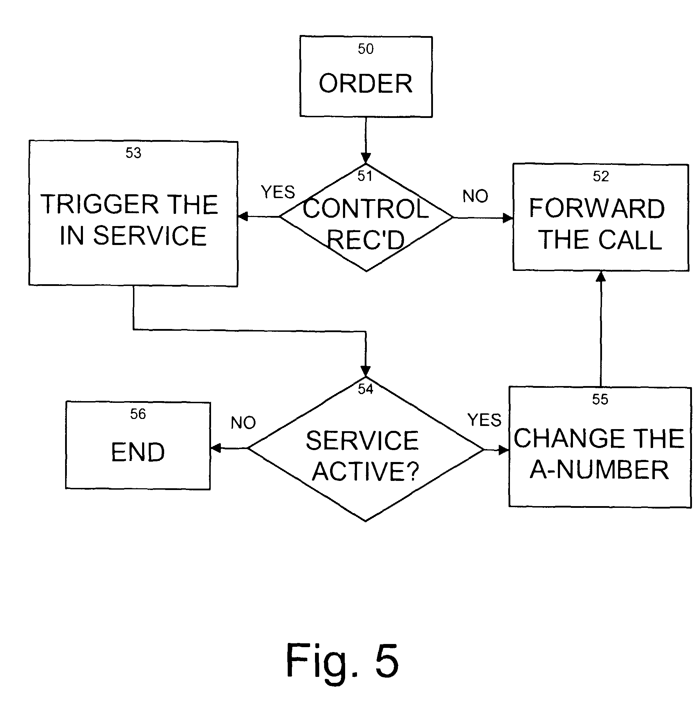

An alternative embodiment is described next by making reference to the flow diagram of Fig. 5 and the reference numerals of its blocks:

In the first case when the subscriber first orders the *temporary number service* in block 50 and subsequently dials the number of the called party in a conventional manner in block 51 (i.e., not using any control codes) (dialed number is, e.g., 096061), the call is processed in a normal manner. Herein, the A-number of the calling party indicated in block 52 to the called party is the subscriber's telephone number as such (unless the number is unlisted, whereby no number indication can be given.

In the second case when the subscriber dials the number of the called party after ordering the *temporary number service,* but now using in front of the dialed telephone number a control code prefix for the change of the indicated A-number (e.g., in the form *66*096061) thus directing the call via the YES branch of the control block 51 (control activated), the prefix *66* of the dialed number directs the call to the SSP switching center of an intelligent network, wherein the call processing is triggered to a "temporary number" service of the IN controller (SCP) that receives the entire dialed B-number of the called party with the dialed control code prefix (*66*) as shown in block 53.

In block 54, the SCP checks whether the connection of the calling party has the "temporary number" service activated. If the service is found activated, the process turns into the YES branch of block 54 and the control code *66* is removed from the B-number field in block 55 without altering any other digits of the field. The same block 55 also overwrites the actual number of the calling connection in the field containing the A-number (field CLI, OCA or REDI, depending on the type of the call) with the "temporary number" retrieved from the data base of the SCP. Furthermore, parameter non_listed_number/ listed_number in said field (CLI/OCA/REDI) is always set as listed_number (allowing the temporary number information to be indicated to the called party at the B-number end), irrespective of the initial value of said parameter in the signaling information related to the subscriber's connection (that is, the telephone number of the calling party). Finally, the call is always ticketed in order to provide authorities when so required with information at a resolution of one second on the link between the "temporary number" and the actual telephone number that was replaced with said "temporary number" during the connection of the call (this facility is necessary for tracing bomb threats and other similar offensive calls that may also be attempted via a temporary number service).

If the service is found unactivated, the NO branch of block 54 is selected, whereby the call is barred in block 56 and the calling party is warned by a suitable tone signal or announcement indicating that there is no temporary number presently activated for the caller, thus inhibiting the caller from replacing his actual telephone number by a temporary number as the caller ID of his outgoing calls.

At this instant, the caller may also be directed to order a "temporary number" for his personal use by routing the operation of the control logic to the "order" processing subroutine.

The above-described method can also be utilized for establishing services in which a subscriber possessing a permanently allocated A-number may when necessary select another desired A-number identity allocated by the service for use in conjunction with another connection than that normally used by the subscriber. Said allocated alternative A-number identity may be, e.g., the A-number identity of the subscriber office phone or the mobile phone normally used by the subscriber for business calls. In this fashion, the subscriber using the alternative A-number can prevent his home number from becoming commonly known in conjunction with business-related calls. Also people involved with sales can act as the subscribers of the correct telecom operator without any need to replace the SIM card of the mobile phone between different types of calls.

Furthermore, the novel method makes it possible to replace the indicated A-number of a calling subscriber by a "code number" which is not related to the numbering scheme of the telecommunications network but can be considered permanently assigned to the subscriber as is, e.g., the subscriber's social security ID code, whereby a great number of different transactions with authorities could be carried out by virtue of the method simply by placing a call without any need for paying a personal visit to the authority's premises.

In the following is described a highly advantageous prior-art application environment of the invention.

While the general description below is written using randomly selected service numbers, the correct (that is, unused and system-compatible) number must be properly selected in a practical embodiment of the invention. The description does not discuss the option that the calling subscriber is directed via a script to order either a toll-free number (with prefix 0800) or a "normal" virtual temporary number.

The temporary number service can be ordered in the automated manner only from that telephone number to which the incoming calls are desired to be directed when the calling party dials the virtual number.

If the service is ordered from a connection different from that to which the incoming calls are to be directed, this facility must be arranged by setting up an ordering site (managed by a human operator) in which certain conventional routines are applied to assure that the party ordering the service also agrees to pay for the service.

The service number for ordering the temporary number can be selected from the group of restrictable numbers (toll-charge numbers), provided that such a facility is available in the public telephone network (depending on the country), whereby the subscriber can prevent when so required the use of the service via his connection.

It must be noted that the service is applicable within the coverage of digital switching centers only.

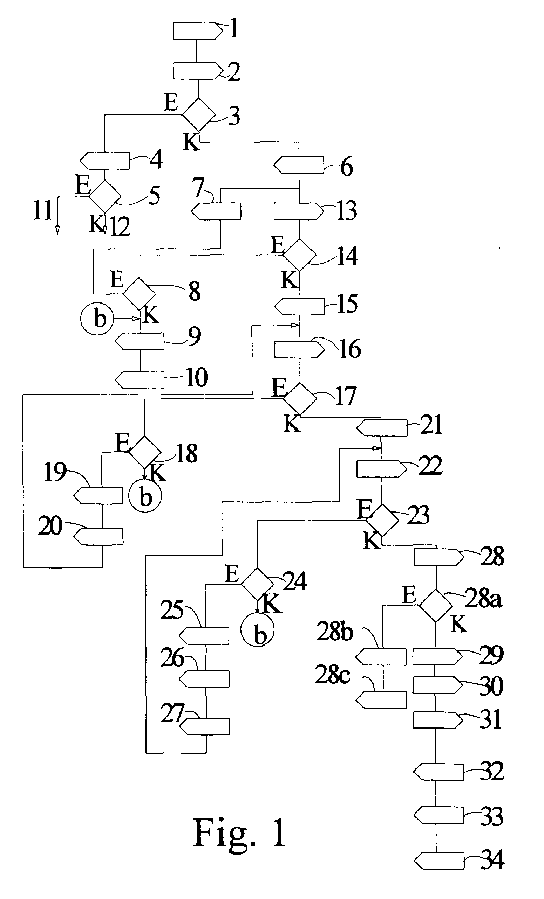

The function of the service ordering is next described by making reference to Fig. 1, whereby the details of the description such as time limits and number sequences including the service ordering numbers, password lengths and the like must be understood to be exemplary and not limiting to the scope of the invention.

First, the subscriber orders the service by going off-hook and dialing the sequence such as *69* in item 1 of the flow diagram.

The dialing of the sequence directs the call in an SSP switching center (a digital switch offering intelligent network services) to trigger an IN service (performed by the intelligent network controller - SCP), item 2, whereby the following steps are carried out (for greater clarity of the text, IN announcements are written in *italics,* subscriber actions in <brackets>, functions of the IN script in (parentheses), and branches of alternative action are written underlined):

In item 3, the IN script verifies that the subscriber's A-number is identified.

### If subscriber's A-number not identified, item 4 triggers an announcement:

*Service not available for this number.*

### If subscriber's A-number is identified, item 6 triggers an announcement:

*Welcome to our ordering service of unlisted temporary telephone numbers; note that the calls received via the ordered temporary number can be connected only to this number from which you are calling now.*

*Remember that you can, however, turn on and off your unlisted temporary number service from any subscriber number using the password to be given you immediately.*

*Please note that the service will be activated only for the period you can define in an instant; and because your own telephone number is recorded in our invoicing system only, it will remain concealed to all calling parties. Correspondingly, the caller's number will not be shown to you in calls passed to you via the temporary number. Now dial the number from which you are calling and to which the calls dialed to your unlisted temporary number will be connected.*

### <subscriber dials the number from which the service is being ordered> in item 13.

In item 14, the IN script verifies that the number dialed by the subscriber is the same as the above-mentioned A-number and, with positive identification, guides the caller to enter the start time and duration of the desired service.

### With a positive result of number verification, item 15 triggers an announcement:

*Please now enter the month, day and time at which you want your unlisted temporary number to be activated; for instance, to set the activation time as October 18, 15:00, dial one-eight-one-zero-one-five-zero-zero. The time can be set to any full quarter of an hour. You can defer the activation of the temporary number by maximally two weeks from this ordering instant of the service.*

### With a negative result of number verification, item 7 triggers an announcement:

*Your subscriber number entry was incorrect, recheck the number from which you are calling. This service can be ordered only from the same number to which you wish the* *calls dialed to your unlisted temporary number to be connected. In the case that you dialed your subscriber number incorrectly, please redial.*

### If the subscriber makes three invalid entries in a succession (verified in item 8), item 9 triggers an announcement:

*Your attempt to order this service has not been accepted, for further advice, please contact our customer service, number "nnnnnnn...".*

Subsequently, the call is terminated in item 10 of the script and the caller hears the line busy tone as a signal of terminated attempt of temporary number ordering.

If the dialing of the subscriber's A-number in item 14 was successful, the script proceeds to item 16, where

### <subscriber enters the start time of the temporary telephone number service>

(In item 17, the IN script verifies the start time of the temporary telephone number service entered by the subscriber.)

### After the subscriber has entered the activation time of the temporary number correctly, item 21 triggers the following announcement:

Please now enter the month, day and time at which you *want your unlisted temporary number to be deactivated; for instance, to set the time of deactivation as October 18, 18:30, dial one-eight-one-zero-one-eight-three-zero. The time can be set to any full quarter of an hour. You can extend the activation period of the temporary number up to one week from the activation of the number.*

### With an incorrect entry of the temporary number activation time, item 19 triggers an announcement:

*Your entry was incorrect.*

Next, item 20 triggers the following announcement:

*Please now enter the month, day and time at which you want your unlisted temporary number to be activated; for instance, to set the activation time as October 18, 15:00, dial one-eight-one-zero-one-five-zero-zero. The time can be set to any full quarter of an hour. You can defer the activation of your unlisted temporary number maximally by two weeks from this ordering instant of the service.*

### If the subscriber makes five invalid entries in a succession, item 18 proceeds to standard announcement 9:

*Your attempt to order this service has not been accepted, for further advice, please contact our customer service, number "nnnnnnn...".*

Subsequently, the call is terminated in item 10 of the script and the caller hears a line busy tone as a signal of terminated attempt of temporary number ordering.

If the entry of the temporary number activation time was successful, the script proceeds to item 21 that triggers an announcement:

*Please now enter the month, day and time at which you want your unlisted temporary number to be deactivated; for instance, to set the deactivation time as October 18, 15:00, dial one-eight-one-zero-one-five-zero-zero. The time can be set to any full quarter of an hour. You can order the activation of the temporary number to last* *maximally NN weeks.*

The end time of the temporary number service is selected in item 22.

### <subscriber enters the deactivation time of the temporary number>

In item 23, the IN script verifies the duration of the temporary number validation set by the service orderer.

After the start/end times of the offered service are thus properly entered, the subscriber is given a number picked from the allocation table 1 of temporary numbers as follows:

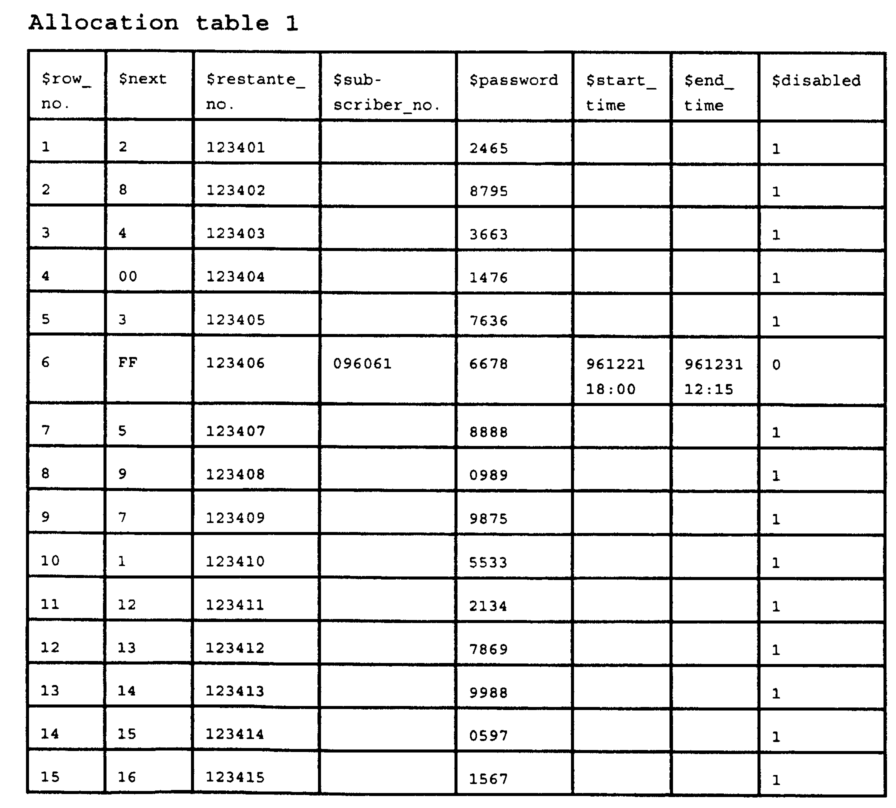

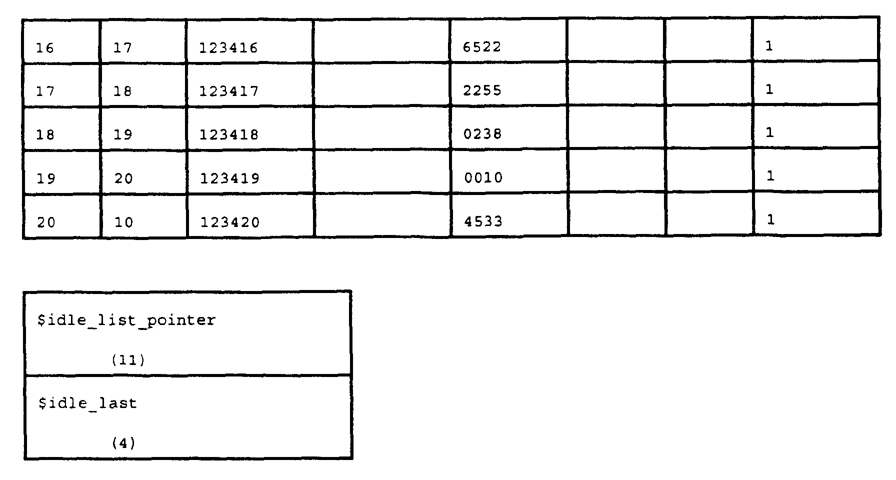

In the allocation table, numbers on rows 1-10 represent a temporary numbers already once allocated (but released in an order different from the number allocation order), row 6 is still in use and numbers of rows 11-20 have not yet been allocated at all.

Actually, each of the earlier used rows (1-10) still contain the previous information until the row is again used for number allocation. For the sake of clarity (to make the table easier to read), such (complete) information is not, however, shown for any other rows except on row 6.

The password on each row of the table is changed every time the temporary number of the row is released from use. The password is computed using a random number generator in which the seeds are such variables as, e.g., the time of number release and the value to be written into the row variable $next of the row. In item 28, the value of the $idle_list pointer is read.

In item 28a is checked whether the service list has any free, unallocated temporary numbers; if the value of pointer $idle_list is 0, no numbers are free, whereby the flow diagram jumps to item 28b, otherwise to item 29.

### In item 28b, the subscriber is given an announcement: All our service numbers are in use, please call later again.

Next, the call is terminated by the script in item 28c and the subscriber receives a line busy tone from the switching center indicating termination of an attempted order of number allocation.

In item 29 are fetched the values of variables $restante no. and $password from an unassigned row of the table 1 indicated by pointer $idle_list.

In item 30 are written on the respective row of table 1 the following values of the variables:
$subscriber no. = $a_number (permanent subscriber number of service orderer)
$start_time = $a_start_time (activation time of the temporary number service as entered by service orderer)
$end_time = $a_end_time (deactivation time of the temporary number service as entered by service orderer).

In item 31 is written:
$idle_list pointer = $next (the addressed row of the table is consulted for the next row with a free number)

By setting variable $next = "reserved (FF)", the selected number (that is, row) in the table is marked to exclude the allocated number from the set of unallocated numbers.

In item 32, the flow diagram exits the table routine and returns the values retrieved from the table to the announcing unit of the IN-SSP switching center which subsequently informs the service orderer (in item 33) of the unlisted temporary number that has been allocated him for the desired time.

### After the service orderer has correctly selected the service activation period and an unallocated row has been found from the table, item 32 triggers the following announcement:

*Your order has been logged. The temporary number service will be activated at the time set by you.*

Additionally, item 33 triggers an announcement:
*Now prepare to write down your unlisted temporary telephone number and your password.*
*Your unlisted temporary telephone number is (109-9-)0790-12345.*
*Your password to control the use of this number is 8679.*
*To repeat: your unlisted temporary telephone number is (109-9-)0790-12345 and your password is 8679.*
*From now on, keep your unlisted temporary number and the password in a safe place - if you lose them, there is no way of recovering them.*
*Dial 1 if you wish to hear a replay of the numbers.*
*Dial 3 or hang up to confirm the activation of the service at your selected time.*

The subscriber is allowed to dial "1" for a desired number of times, as much as is needed for recording the allocated unlisted temporary telephone number and the password.

In item 34, the connection is terminated and the subscriber receives a line busy tone from the switching center indicating termination of the number allocation ordering operation.

### If the subscriber during the ordering operation enters the validation period of the temporary number incorrectly, item 25 triggers an announcement:

*Your entry was incorrect, please repeat your entry.*

*Item 26 triggers an announcement:*
*Please now enter the month, day and time at which you want your unlisted temporary number to be deactivated; for instance, to set the deactivation time as October 18, 15:00, dial one-eight-one-zero-one-five-zero-zero. The time can be set to any full quarter of an hour. You can defer the deactivation time of your unlisted temporary number by maximally one week from the activation time of the temporary number.*

Item 27 triggers an announcement:
Please, retry.

### If the subscriber makes five invalid entries in a succession, item 24 triggers standard announcements 9 and 10:

*Your attempt to order this service has not been accepted, for further advice, please contact our customer service, number "nnnnnnn...".*

Subsequently, the call is terminated in item 10 of the script and the caller hears a line busy tone as a signal of terminated attempt of temporary number ordering.

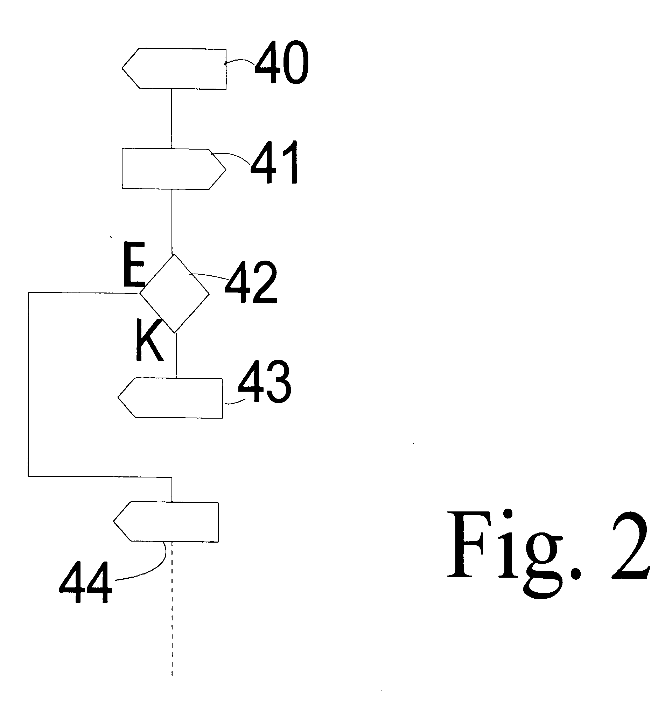

After the service orderer makes the allocated number public or discloses it in some other way, the use of the service takes place as shown in Fig. 2:

A caller (herein referred to as the A-number subscriber) wishing to call a temporary number dials the number (according to the example): *(109-9-)0790-12345*. In item 40 of the flow diagram, the *prefix* part *[(109-9-)0790] of this number sequence* directs the call in the SSP switching center to trigger an IN service in which the following steps are carried out (the description below omits the actual script and elucidates its key steps only). In conjunction with the triggering of the IN service, the SSP switch submits the intelligent network controller (SCP) the numbers in full format (109-9-0790-12345), complemented with the subscriber's A-number, OCA and REDI numbers, etc.

In item 41 is tested if the dialed number is any of those logged in Table 1.

The selection of the correct row takes place by comparing row by row the content of column $restante_no. with the dialed number.

In item 42 is tested if the service is still valid (service is considered unavailable if item 41 above fails to find a matching row or when a matching row is found but the validation period (column $end_time) exhausted or the value of variable $disable is set to logic one indicating status "disabled").

If the service is disabled, the caller is given an announcement
*service not available*
in item 43, whereby the SSP switching center sends the caller a line busy tone as a signal of terminated attempt of calling the service of temporary telephone numbers.

If the service order is still valid and enabled, the IN control (SCP) in item 44 gives the SSP switching center a command to connect the incoming call to the subscriber's permanent number stored in column $subscriber_no. of the selected row in Table 1.

The incoming call is *always logged in a call receipt,* even when the called subscriber is busy or does not answer. This arrangement produces statistical evidence serving to prove the service orderer the function of the service in cases that the subscriber doubts its performance. E.g., when the temporary number is used in classified ads, the seller placing the advertisement may blame the telephone operator for defective function of the switching center on the basis of a low number of incoming calls although the real reason might have been a low interest value of the advertised object.

Typically, the caller number information (subscriber's A-number or OCA and/or Redirect number) will not be forwarded to the subscriber receiving the calls via the ordered service, whereby the interest value of the service is elevated also in the group of potential callers: the calling A-subscriber or a subscriber transferring the call can unhesitatingly rely on the confidentiality of his telephone number.

The implementation of the invention also takes into account the requirement that the ordered service may not be transparent to the COLP (connected line presentation) function (this is a provision to be utilized in future technology when all trunk lines will utilize ISUP signaling), thus assuring that the identity of the subscriber ordering the service will remain hidden to, e.g., a party calling via a call transfer service.

A manual termination (or query of call statistics) occurs according to the invention as follows:

The service orderer calls a customer service number, e.g., *11*, arranged to initiate the temporary number cancellation/control routine.

Alternatively, the service number may also be the same from which the service is ordered, whereby latter routine is carried out under a script control.

This prefix part of the service number directs the call to an IN triggering procedure carrying out the following steps (the description below omits the actual script and elucidates its key steps only):

The caller is requested to enter the password.

Next, the caller is requested to enter the temporary number associated with the password.

The password and temporary number entered by the subscriber are verified. If a mismatch is detected, the caller will not be informed which one is incorrect, but rather, a new entry of both the password and the temporary number is requested. With a positive match, the caller is requested to perform any of the following dial-controlled actions (whereby the control actions may alternatively be arranged in a menu-controlled manner when other functions beside simple number cancellation are desired):
1 = immediate cancellation of the ordered temporary number
2 = disable call forwarding via the temporary number (keeping the ordered temporary number still valid)
3 = enable call forwarding via the temporary number (i.e., cancellation of items 2 or 4)
4 = answer incoming calls to temporary number hereafter with an announcement "thank you for your call, but another offer has already been accepted" (other announcements replacing this exemplary phrase can be used as well)
5 = change of target number to receive calls via the temporary number (when desired this option may be offered even after the order is placed, whereby the call billing is anyhow directed to the original A-number from which the temporary number service was ordered).

Cancellation of the temporary number validation by the IN control unit (SCP) occurs automatically under a calendar schedule or a program call initiated when the time instant stored in the first memory location $end_time is passed.

After the permanent cancellation of the temporary number, a new password is computed for the released row of the allocation table, the row is linked to the *last* free row (indicated by pointer $idle_last) and the value of pointer $idle_last is changed to refer to this recently released row of the allocation table.

## Claims

1. Method of allocating a secondary, temporary telephone number for a subscriber of a connection in an intelligent-network-based telephone system, which subscriber acts as an orderer of the service, in which system an A-number allocated to the subscriber is available, said method comprising the steps of
- verifying the subscriber identity of the temporary number service orderer with the help of an automated routine based on the subscriber's A-number,
- by consulting a table, allocating the subscriber on the basis of the A-number to use an unlisted temporary number having a validation period selectable by the service orderer within preset time limits, and
- giving the service orderer a password permitting alteration of the validation period of the temporary number,
**characterized** in that
- the A-number identity of the service orderer is replaced in the direction of outgoing calls with said allocated temporary number in at least a portion of outgoing calls.

2. Method according to claim 1, **characterized** in that said A-number identity is changed only when the subscriber has entered a specific service control code defined for this purpose.

3. Method according to claim 2, **characterized** in that, in the processing of said outgoing call, said control code is removed, the call information field (CLI/OCA/REDI)) containing said A-number identity is changed by overwriting the actual A-number of the calling connection with the number information of said "temporary number" and the value of parameter non_listed_number/listed_number in said field (CLI/OCA/REDI) is always set as listed_number.

4. Method according to claim 1, **characterized** in that the target number of incoming calls via said service is altered.
